# EUROPEAN PATENT APPLICATION

(11) **EP 1 336 931 A2**
(43) Date of publication of application: **20.08.2003**
(21) Application number: 03356007.9
(22) Date of filing: 23.01.2003
(51) Int. Cl.: G06F 17/60

(54) **Process and system for ordering photographic work from a portable terminal**

(30) Priority: 14.02.2002 FR 0201788
(71) Applicant: EASTMAN KODAK COMPANY, Rochester, New York 14650 (US)
(72) Inventor: Furon, Olivier Alain Christian, c/o Kodak Ind., 71102 Chalon sur Saone Cedex (FR); Vau, Jean-Marie, c/o Kodak Industrie, 71102 Chalon sur Saone Cedex (FR)
(74) Representative: Weber, Etienne Nicolas

(57) **Abstract**

The present invention relates more particularly to a process and a system enabling a user-customer to order, from a mobile terminal (1), photographic work in a reliable and simple way, by avoiding as far as possible manual transactions that may generate risks of errors. The customer is provided with a mobile terminal (1) and with at least one photographic support (40,42) including photographic images. The customer uses an order station (5) which interacts functionally on the one hand with the photographic support (40,42), and on the other hand, by means of a peripheral network comprising the communication links (16,17,18,19,20,21), with the mobile terminal (1) and a processing unit (14,15). The interaction of the means (1,40,42,5) enables the customer to send, remotely, a purchase order for photographic work corresponding to said photographic images to a processing unit (14,15).

The main application of the present invention relates to the users of portable terminals who desire to send remotely orders for photographic work to a processing laboratory.

## Description

The present invention is in the field of the processing of silver and/or digital images, in an environment of mobile or portable terminals. The present invention relates more particularly to a process and a system enabling a user-customer to send, from a mobile terminal, an order for photographic work.

The network of services offered for ordering photographic work comprises especially equipment or kiosks that enable customers to send orders remotely, in a user friendly way and without having to go to one or more people in a photographic processing laboratory in order to send the order.

The prior art describes means enabling the use of "self-service" stations to order photographic processing remotely from a photographic laboratory. Such an installation (interactive self-service station) is described in Patent Application EP 0,769,720. The self-service station described in Patent Application EP 0,769,720 enabled the improvement of a conventional ordering system in which the customer often had to write their instructions by hand, for example on a bag containing a roll of film to be developed. In addition to uncertainty or risks of errors by writing the instructions, these manual operations could generate risks of errors of interpretation of these instructions by the processing laboratory. The self-service station described in Patent Application EP 0,769,720 eliminates all these disadvantages, especially by using electronic means that enable the user-customer of the station, to select from the instructions displayed on a screen of said station. The station described in Patent Application EP 0,769,720 is not based on the use of mobile terminals; communication is limited to exchanges of purchase orders between said station and the processing laboratory. The implementation of an order for photographic work by using the station described in Patent Application EP 0,769,720, requires some manual operations: for example, introducing a loyalty card into the station, placing a bag in the station, and detaching a copy of the printed instructions.

In an environment where portable terminals are becoming increasingly widespread, the present invention enables an order for photographic work to be sent in a simple and reliable way to a photographic processing laboratory. The objective is to avoid as far as possible manual transactions that can generate errors. The order for photographic work is sent by using a portable terminal to initialize an order station intended to manage order transactions between the customer and the laboratory.

The present invention relates to a process for sending an order for photographic work from an order station interfaced on the one hand with a photographic support that includes at least one recorded image, and communicating on the other hand with a mobile terminal used by a customer; said process enabling automatic management of the order transactions between the customer and a photographic processing unit, and said process comprising the following steps:
a) compose, using the mobile terminal, the identifier of the order station;
b) validate the identification request of the mobile terminal;
c) save the identifier of the mobile terminal;
d) automatically initialize the order station;
e) automatically identify the photographic support interfaced with the order station;
f) automatically link the photographic support identified with the identifier of the mobile terminal;
g) select the photographic processing parameters supplied by the order station;
h) automatically save the selected photographic processing parameters;
i) automatically produce the digital file of the photographic processing data of the images of the photographic support; said processing data comprising digital data of the parameters selected in step g), and digital data of the mobile terminal's identifier;
j) automatically transmit the digital file of the photographic processing data to the photographic processing unit.

Consequently, the present invention relates to a process implemented by a customer provided with a mobile terminal and provided with a photographic support comprising images previously recorded on a photographic film or saved on a digital support (smart card). The process of the present invention enables an order station for photographic work to be initialized from the identification of the user-customer of said station. The identification of the customer is supplied by the identifier (identity) of the mobile terminal. The order station enables an electronic order to be sent to a processing unit or laboratory, that may be located for example several dozens of kilometers from said order station. Having interfaced the photographic support with the order station, the process of the invention enables said photographic support to be automatically linked with the identifier of the mobile terminal, and then enables a digital file of the processing data to be produced and sent automatically to a distant processing unit. The processing data correspond to the processing parameters selected by the customer using the order station. The process of the invention also enables a digital file of processing data to be enhanced with digital data of the images to be processed or metadata specific to the customer.

The present invention also relates to a system enabling the process previously described to be implemented. The system enables a customer, provided with a mobile terminal and a photographic support comprising at least one recorded image, to send a digital file of processing data of the at least one image to at least one terminal of a photographic processing unit, said system comprising:
a) an order station identified by a unique identifier, said station comprising interface elements for receiving and identifying the photographic support, selecting photographic processing parameters, and printing said processing parameters;
b) a peripheral network enabling communication with the order station, said peripheral network comprising links and comprising a gateway enabling the management of the communication of digital data between the mobile terminal and a central server, said central server also enabling the management of the communication of digital data between the order station, the mobile terminal and the terminal of the photographic processing unit.

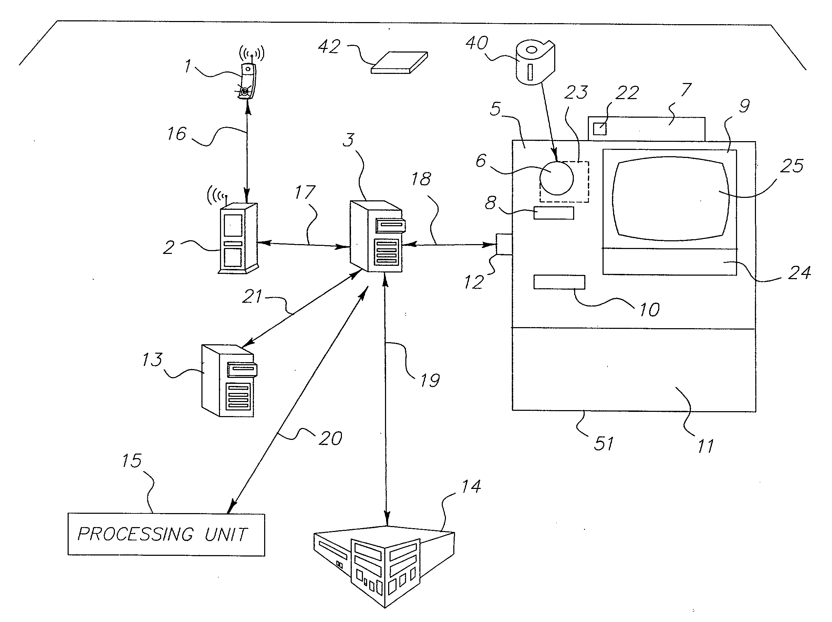

Other characteristics and advantages of the invention will appear on reading the following description, with reference to the single drawing of Figure 1.

Figure 1 represents diagrammatically the main hardware elements of the system according to the invention.

The following description is a description of the main embodiments of the invention, with reference to the drawing of Figure 1.

Compared to the prior art, the present invention describes a process and a system that enable photographic work to be ordered in a reliable and simple way, without using an intermediate material support (e.g. envelope) to send a purchase order. The present invention enables any owner of a portable terminal, subscribing to a photographic service, to electronically send purchase orders to a processing laboratory. The present invention enables a purchase order to be sent in a reliable way. The main ordering operations do not require for example any manual envelope or label transaction (unless possibly the recovery by the customer, of a ticket formalizing the main parameters of the sent order). The present invention enables the customer to be identified automatically by the identifier of their portable terminal, before linking the customer thus identified with for example a roll or reel of photographic film to be processed. The present invention then enables a digital file of data corresponding to the processing to be done to be sent electronically to a processing laboratory. The process of the present invention thus reduces the risks of errors between the customer and processing laboratory, errors due to the use of an intermediate material support during the transmission of the order for photographic work.

In the overall stream of successive operations, from taking the shot to the processing of a photographic image, there is the step of ordering a type of final processing (photo paper, digitization, etc.) selected by the customer, for the initial shots. When a customer wants for example to develop a photographic film in a processing laboratory or unit remote from a place where they can order photographic work, this customer is dependant on the order process and the related traceability. Traceability is therefore more important if the photographic work is ordered for example electronically, remote from the processing unit, and not by directly addressing for example one person of the processing unit. The traceability of image supports is generally provided by known recognition systems, e.g. barcodes. In the case of a roll or reel of film, this barcode is put for example on the outside of the enclosure containing the reel of film. Barcode can also be put directly onto the photographic film, for example onto the magnetic track placed on an outside edge of the film. When one or more reels or cartridges of film to be developed or to be digitized are put in one envelope to be picked up by a processing laboratory, the customer is generally recognized or identified by the cartridge's barcode. The traceability is also quite important if the recorded images do not come from a silver photographic support (film), but from a photographic support containing digital images, like for example a memory card (smart card). If the customer orders for example a digitization of the images to receive them later by e-mail, this customer needs to be clearly identified, in many cases they will use their electronic address (e-mail address). This thus requires the customer to legibly write this electronic address on the envelope, so that the processing laboratory can decode it easily. The present invention enables the customer to be linked automatically and uniquely to each reel of film to be processed, without any manual intervention. To enable this, one of the essential characteristics of the invention consists in using a mobile terminal 1; means which are being used increasingly. The mobile terminal 1 is used so as to communicate with an order station 5. The order station 5 is placed at a distance or close to a processing unit or laboratory 14, 15. The processing unit 14 is for example a large laboratory comprising equipment for processing silver and/or digital images. The processing unit 15 is for example a digital minilaboratory placed in a department store. The distance between the order station 5 and the processing unit is for example several dozens of kilometers. But distance can be also reduced to a few meters, if for example the station 5 and the processing unit (minilab) are placed in the same shop. The order station 5 enables photographic work to be ordered from the processing unit 14, 15. The photographic work is ordered from a photographic support 40, 42 interfaced with said order station 5. The photographic support 40, 42 is a material support that comprises at least one image recorded on a film strip or digital support. The process of the invention is implemented by a software program whose order instructions or details enable the sending of an order for photographic work remotely to be made reliable and simplified, while avoiding hassle and risks of errors (and consequently additional costs), both for the customer and the processing laboratory. Portable platforms or mobile terminals 1, like for example cell phones and PDAs (Personal Digital Assistant), include display screens and enable, through the internet, different services to be subscribed to and reached, enabling for example the remote ordering of photographic work. The present invention relates to a process and a system that enable a customer provided with a mobile terminal 1 and with a photographic support 40, 42, to send an electronic order, by using an order station 5.

The process according to the invention enables a customer moving with a mobile or portable terminal 1, for example a cell phone, to order photographic work remotely from a processing laboratory 14, 15, by using the mobile terminal 1 to be recognized or identified. The customer also uses an order station for photographic work 5 provided for this purpose. On-line image services set up in the field of imaging are implemented in particular by using mobile terminals. Mobile terminals, like for example cell phones or PDAs, are portable platforms that enable digital images to be received, displayed, or even recorded. The order station 5 receives, for example by interfacing it manually with said station, the photographic support 40, 42. The photographic support 40, 42 comprises previously recorded silver or digital images to be processed according to a specific process selected by the customer. The customer composes, from the keyboard of the portable terminal 1, the identifier of the order station 5. Generally, the identifier of the order station 5 is alphanumeric and displayed on said order station 5. By calling this identifier of the order station 5 with the mobile terminal 1, the customer is automatically connected to an on-line service. This service sends for example automatically a request to the customer asking them to agree to be identified. The identification of the customer is operated through the mobile terminal 1, itself given an identifier. The customer confirms the request by using their portable terminal 1; they confirm by using the keyboard of their terminal 1 if this terminal 1 is for example a PDA; or they confirm by answering vocally in said terminal 1, if the terminal 1 is for example a cell phone. The customer is consequently identified by the identifier of the mobile terminal 1. The validation made by the customer means that said customer agreed to be identified. But in a more automated embodiment, the identification of the customer from the identifier of the mobile terminal is operated automatically, without validation by the customer, and thus without request. And this is after the composition of the identifier of the order station 5, from the keyboard of the mobile terminal 1. The process of the invention enables the identifier of said portable terminal 1 to be sent automatically to a central server 3; this identifier, characteristic of the customer profile, is called "user ID" or MSISDN (Motive Subscriber Integrated Services Digital Network Number). The MSISDN is for example the phone number assigned to the customer. The central server 3 saves or stores the identifier of the mobile terminal 1 (MSISDN), which represents the customer profile. The central server 3 transmits an authorization to start to the order station 5, as well as data specific to the customer, which enables the initialization of said order station 5. This step of the process enables the order station 5 to be initialized automatically from the validation of identifier of the mobile terminal 1 (customer profile).

An interface element or module 9, comprising the keyboard 24 and the display screen 25, enables a menu of photographic processing parameters to be displayed. The menu generally comprises the scrolling display of several successive screens; going from the previous screen to the next screen being generated automatically when the customer has selected the options of the menu of the previous screen. It is also possible to display all the instructions and the options of the menu on a single screen (without scrolling), if the size of the screen 25 enables it. The customer inserts the photographic support 40, 42 in their possession into the interface elements 6, 8 of the order station 5. The photographic support 40 is for example a cartridge of color negative photographic film comprising at least one recorded image, said film cartridge 40 being inserted by the customer into the first reception device 6. The photographic support is for example a smart card 42 comprising at least one digital image, said card 42 being inserted by the customer into the second reception device 8. The process of the invention enables automatic identification of the photographic support 40, 42, and automatic linking of said photographic support with the previously saved identifier of the mobile terminal 1 (customer profile). After this link, the process of the invention enables the customer to select, by means of the menu activated and displayed on the screen 25, the photographic processing parameters that correspond with the photographic processing work that the customer wishes to carry out in the processing unit 14, 15. When the customer has finished the selection, all the selected parameters are automatically saved as digital data, and then a file of these digital data relating to the selected photographic processing is produced and automatically sent to the server 3. The server 3 then automatically sends this digital data file to the processing unit 14, 15. The processing unit 14, 15 has been for example selected during the execution of the menu, from a preset list offered to the customer.

According to an advantageous embodiment of the process of the invention, the digital data file of the photographic processing also enables, in the case of digitally recorded images, the digital data of dots (pixels) specific to said digital images to be transmitted. The digital data file of the photographic processing can also be enhanced by metadata specific to the customer. These metadata is for example stored or saved in a server 3, 13; the metadata comprises for example information inherent to the recorded images, or the preferences of the customer as to the photographic work to be carried out. These additional data can thus facilitate the use of the image. For a digital photograph, the metadata are for example included in the header of the image file: author of the photograph, time-day, location of the recording, etc. The customer who subscribed for example to a geolocation service, can thus obtain digital images, recorded especially with the location where said image was recorded.

According to an alternative of the previous embodiments, the process of the invention additionally enables a material support to be edited automatically, for example a paper ticket, on which are printed the data of the photographic processing file sent to the processing unit 14, 15. This duplication enables the customer to have a receipt (traceability) allowing them for example to facilitate the recovery, at the processing laboratory 14, 15, of the ordered photographic work. This ticket also enables the customer to verify on receipt, the previously ordered photographic work, in particular if they receive them for example at home, by mail or electronically.

The system of the invention, represented by Figure 1, is implemented by executing the instructions or orders of the software program of the process of the present invention. The system comprises an order station 5 comprising a frame 51. The order station communicates, by means of links 16, 17, 18, with the mobile terminal 1. The order station 5 is identified by a unique alphanumeric identifier (specific to said station) displayed in the location 7. The display is for example a number identifying the order station 5, highlighted by means of LEDs. This display is permanent or not. The user of the station 5 can for example press on a button 22 to activate the diodes and obtain in a legible way, at the location 7, the display of the identifier of the order station 5. The order station 5 comprises interface elements 6, 8, 9, 10, 12 that enable the process of the invention to be implemented. The interface elements 6, 8 enable the reception of the photographic supports 40, 42 comprising a strip of film of latent recorded images or digital images respectively. In a main embodiment, the interface element 6 is intended to receive a photographic support, of the type APS film cartridge or reel (KODAK's Advanced Photo System). This type of film cartridge comprises in particular 100, 200 and 400 ISO color negative photographic films. The interface element 6 comprises a barcode scanner or reader 23. When the photographic support, for example the film cartridge 40 comprising a barcode identification on its outside enclosure is introduced into the interface element 6 specific to it, said cartridge is automatically identified. Each film cartridge has a unique identification (barcode). Identifying the film cartridge means that the barcode specific to said film cartridge 40 is scanned and the result of the reading is automatically sent to the central server 3. The barcode identification can be also placed on the film strip, for example on one of the ends of said strip, outside the locations reserved for images.

In another embodiment, the interface element 8 is intended to receive a digital image photographic support. This interface element generally appears as a smart card 42 comprising at least one digital image. The smart card 42 is preferably a smart card that enables digital images to be saved. When the photographic support, for example the smart card 42 is introduced into the interface element 8 specific to it, said card 42 is automatically read and the data which are stored on said card are automatically linked to the user, by the identifier of the portable terminal 1. After introduction of the card 42 into the interface element 8, the customer can also view on the screen 25 each of the digital images recorded on said card 42.

After the digital file comprising the processing data is transmitted to the laboratory, i.e. when the purchasing order for photographic work has been sent, the process of the invention enables the digital photographic support 42 to be withdrawn from the order station 5. Withdrawal is operated automatically by said station, for example by ejection of the card; or an instruction is for example displayed on the screen 25 of said order station 5 to indicate to the customer that they can remove the photographic support 42.

In a downgraded embodiment, the identification of the photographic supports 40, 42 can be operated, after introduction of said supports 40, 42 in their respective interfaces 6, 8, by executing instructions displayed on the screen 25 of the order station 5.

The order station 5 comprises the interface element 9 that enables the customer to select the order parameters for photographic work from a menu displayed on the screen 25. The menu offers a set of instructions and preset options that enable an order for photographic work to be sent to a processing unit or laboratory 14, 15 remote from the order station 5. The screen 25 is for example a touch-sensitive screen. In a first embodiment, the interface element 9 comprises an alphanumeric keyboard 24, and a display screen 25. In a second embodiment the interface element 9 comprises just a touch-sensitive screen. The screen 25 enables the photographic processing parameters to be selected by displaying successive instructions offering choices to the customer. For example: number of photos, print support (glossy or matt photographic paper, color or black-and-white, slide, compact disc CD, or other support), metadata, etc. The order station comprises an interface element 10 that enables the customer to receive the printout of the photographic processing data, for example on a ticket card. The order station 5 comprises an interface element 12 that is a port; for example an internet connection that enables communication with a communication network peripheral to said station. In a preferred embodiment, the peripheral network comprises a central server 3, a metadata server 13, a gateway 2 of WAP type or voice server type, and links 16, 17, 18, 19, 20, 21.

The order station 5 communicates on the one hand with the central server 3 by the high speed link 18, and on the other hand with a gateway 2 for example of WAP type (Wireless Application Protocol) by the link 17. The gateway 2 also has a voice server function. The link 17 also enables for example connection to the internet. The gateway 2 enables communication by the link 16, with the mobile terminal 1 and a wireless network, for example GSM (Global System for Mobile) or GPRS (General Packet Radio System). The central server 3 also communicates, by high-speed links 19, 20, with terminals placed in the processing laboratories 14, 15. The high-speed links 18, 19, 20, 21 enabling the exchange of digital data between the elements of the system of the present invention are for example cabled links. The processing laboratory 14 is for example a conventional laboratory able to supply any type of photographic work: development of silver film, digitization, printing of images on particular supports (e.g. on cloth), etc. The processing laboratory 15 is for example a laboratory specialized in the digital photographic work. In a particular embodiment of the system of the invention, the central server 3 communicates with at least one other server 13 of digital data. The server 13 contains for example metadata. These metadata constitute for example additional information to the data contained in the processing file. For a photograph or a given image, metadata are for example the location of the photograph, the time and day of its production, the author of the photograph, the type of camera used, a personalized message, etc.

The order station also comprises a container or recipient 11. This container 11 is intended to receive the silver photographic supports 40, after the sending of the purchase order by the customer to the processing laboratory 14, 15. The film photographic supports 40 are for example picked up every day by the processing laboratory 14, 15. They will then be used according to the purchase order previously sent by the customer. They may for example be developed on photographic paper, or digitized.

The invention can be implemented by using an order station 5 comprising interface elements that enable digital images to be unloaded from a photographic support of the digital camera type. In this embodiment, the digital camera is interfaced mechanically, for example clipped, to the order station 5.

Another embodiment enables image files to be transferred by using an order station 5 comprising a reception device, for example of the short wave radio type or WLAN type (Wireless Local Area Network). The order station 5 can thus receive, by a wireless local area network, digital images unloaded by the customer in said station. In this case, the customer is for example provided with a camera-telephone comprising a transmitter device that enables image files to be transferred to the station 5.

While the invention has been described with reference to the preferred embodiments, it is clear that this patent application covers all modifications or variants that can be made and which correspond with the purpose of the invention. Accordingly, such embodiments are for illustration and do not restrict the claimed protection.

## Claims

1. A process to send an order for photographic work from an order station (5) interfaced on the one hand with a photographic support (40), (42) that includes at least one recorded image, and communicating on the other hand with a mobile terminal (1) used by a customer; said process enabling automatic management of the order transactions between the customer and a photographic processing unit (14), (15), and said process comprising the following steps:
a) compose, using the mobile terminal (1), the identifier of the order station (5);
b) validate the identification request of the mobile terminal (1);
c) save the identifier of the mobile terminal (1);
d) automatically initialize the order station (5);
e) automatically identify the photographic support (40), (42) interfaced with the order station (5);
f) automatically link the photographic support (40), (42) identified with the identifier of the mobile terminal;
g) select the photographic processing parameters supplied by the order station (5);
h) automatically save the selected photographic processing parameters;
i) automatically produce the digital file of the photographic processing data of the images of the photographic support; said processing data comprising digital data of the parameters selected in step g), and digital data of the mobile terminal's identifier;
j) automatically transmit the digital file of the photographic processing data to the photographic processing unit (14), (15).

2. The process according to Claim 1, wherein when the images of the photographic support (42) are digital images, the digital data of said images are also included in the processing data file transmitted to the photographic processing unit (14), (15).

3. The process according to Claims 1 or 2, wherein the edition of a material support comprising the photographic processing data of the file produced in step i) of Claim 1, is operated automatically by the order station (5).

4. The process according to any one of Claims 1-3, wherein the digital file of the photographic processing data obtained in step i) of Claim 1, also comprises metadata specific to the customer, said metadata being stored in a server (3), (13) communicating with the order station (5).

5. A system enabling a customer, provided with a mobile terminal (1) and a photographic support (40), (42) comprising at least one recorded image, to send a digital file of processing data of the at least one image to at least one terminal of a photographic processing unit (14), (15), said system comprising:
a) an order station (5) identified by a unique identifier, said order station (5) comprising interface elements (6), (7), (8), (9), (10), (22), (52) for receiving and identifying the photographic support, selecting the photographic processing parameters, and printing said processing parameters;
b) a peripheral network enabling communication with the order station (5), said peripheral network comprising links (16), (17), (18), (19), (20), (21) and comprising a gateway (2) enabling the management of the communication of digital data between the mobile terminal (1) and a central server (3), said central server (3) also enabling the management of the communication of digital data between the order station (5), the mobile terminal (1) and a terminal of the photographic processing unit (14), (15).

6. The system according to Claim 5, wherein the central server (3) communicates with at least one other digital data server (13).

7. The system according to any one of Claims 5 or 6, wherein the gateway (2) enabling the management of the communications of digital data between the mobile terminal (1) and the central server (3) is a WAP type gateway.

8. The system according to any one of Claims 5 or 6, wherein the gateway (2) enabling the management of the communications of digital data between the mobile terminal (1) and the central server (3) is a voice server.

9. The system according to any one of Claims 5-8, wherein the photographic support is a cartridge (40) of photographic film comprising at least one recorded image.

10. The system according to Claim 9, wherein the enclosure of the photographic film cartridge (40) comprises a barcode identification.

11. The system according to Claim 9, wherein the barcode identification is located on the film strip.

12. The system according to any one of Claims 5-8, wherein the photographic support is a smart card (42) comprising at least one digital image.

13. The system according to any one of Claims 5-12, wherein the order station (5) comprises at least one interface element (6) for receiving and identifying the cartridge (40) of photographic film, and/or at least one interface element (8) for receiving and identifying the smart card (42).

14. The system according to any one of Claims 5-13, wherein the interface element (9) of the order station for choosing the photographic processing parameters, comprises a button keyboard (24) and a display screen (25).

15. The system according to any one of Claims 5-14, wherein the interface element (9) of the order station for choosing the photographic processing parameters, comprises a touch-sensitive screen.

16. The system according to any one of Claims 5-15, wherein the order station (5) also comprises a container (11) for receiving the photographic film cartridges (40) after their identification.
